# EUROPEAN PATENT APPLICATION

(11) **EP 4 775 452 A2**
(43) Date of publication of application: **15.07.2026**
(21) Application number: 26182484.1
(22) Date of filing: 07.12.2023
(51) Int. Cl.: B60Q 3/54

(54) **ILLUMINATION DEVICE OF OR FOR A VEHICLE, CLADDING COMPONENT OF OR FOR A VEHICLE, COMPRISING SUCH AN ILLUMINATION DEVICE AND VEHICLE HAVING SUCH AN ILLUMINATION DEVICE OR SUCH A CLADDING COMPONENT**

(62) Divisional of application: 23214926.0
(71) Applicant: HELLA Saturnus Slovenija d.o.o., 1000 Ljubljana (SI)
(72) Inventor: Bajec Strle, Alenka, 1000 Ljubljana (SI)
(74) Representative: Behr-Wenning, Gregor

(57) **Abstract**

The present invention relates to an illumination device (109) of or for a vehicle (50), comprising a light source (12, 12L, 12R) for providing light rays (Ir), an optical element (14) for guiding or directing the light rays (Ir) through the Illumination device (109), the optical element (14) comprising at least two light guides (16) arranged adjacent to each other, a cover layer (22), a switchable layer (28) switchable between a first state in which the switchable layer (28) is transparent for incident light rays (Ir) and a second state in which the switchable layer (28) reflects the incident light rays (Ir), or a polychrome switchable layer (28) switchable between a first state in which the switchable layer (28) is of a first color, and a second state in which the switchable layer (28) reflects the incident light rays (Ir) and is of a second color, the optical element (14) arranged between the cover layer (22) and the switchable layer (28), a power supply (30) for applying a voltage on the switchable layer (28), and a switching element (32) for turning on and off the power supply (30).

## Description

The present invention is directed to an illumination device of or for a vehicle. Moreover, the present invention is drawn to a cladding component of or for a vehicle, comprising such an illumination device and to a vehicle having such an illumination device or such a cladding component.

### PRIOR ART

Illuminated surfaces incorporated in illumination devices e.g., on cladding components of vehicles which are indistinguishable from adjacently arranged surfaces when switched off, are a highly desirable product in the automotive industry. Cladding components may be bumpers, grilles or dashboards, to name a few. Such cladding components expand the styling options of a vehicle and can be used to individualize the appearance of the vehicle. Such surfaces are also referred to as "hidden until lit".

US 2017/0101047 A1, WO 2022/128743 A1 and US 2015/0210226 A1 describe such cladding components. However, one of the common drawbacks is that parts and components of the illumination device may be visible from outside when switched off. Moreover, it is difficult to set the color of the surfaces such that they exactly match the color of the adjacently arranged surface. One reason is that the color gamut of the color displays is limited. Thus, a certain difference in the surface colors is always notable when the respective illumination device is switched-off. US 10,066,069 B2 describes a coating where a "hidden until lit" effect is created by the use of low transmission neutral density filters. In this case, the illumination device cannot be seen in the off state, however, the efficiency of such systems is typically on the order of 10%.

Further information on the technical background to which the present invention relates can be found in WO 2021/142535 A1, US 2023/273492 A1, US 10018315 B2, DE 10 2021 119 165 A1, EP 3 572 282 A1, FR 3 1 28 770 A1 and US 2023/158950 A1.

It is therefore one task of one embodiment of the present invention to present an illumination device that provides a uniformly illuminated surface in any desired color and that provides surfaces that are inconspicuous to adjacently arranged surfaces when switched off. Beyond that, the present invention has the object to present a cladding component being equipped with such an illumination device and a vehicle comprising such an illumination device and/or such a cladding component.

The task is solved by the features specified in claims 1, 12 and 13. Advantageous embodiments are the subject of the dependent claims.

According to an embodiment the illumination device of or for a vehicle comprises
- a light source for providing light rays,
- an optical element for guiding or directing the light rays through the illumination device, the optical element comprising at least two light guides arranged adjacent to each other,
- a transparent cover layer,
- a switchable layer switchable between
   ∘ a first state in which the switchable layer is transparent for incident light rays and
   ∘ a second state in which the switchable layer reflects the incident light rays,
- a polychrome switchable layer switchable between
   ∘ a first state in which the switchable layer is of a first color, and
   ∘ a second state in which the switchable layer reflects the incident light rays and is of a second color,
- the optical element arranged between the cover layer and the switchable layer,
- a power supply for applying a voltage on the switchable layer, and
- a switching element for turning on and off the power supply.

Under usual operation conditions of the illumination device, a person is looking on the cover layer in the mounted state of the illumination device. Thus, the cover layer forms the visible side of the illumination device.

In the first state the switchable layer is either transparent to incident light rays impinging on the switchable layer or of a first color. It is also possible to provide the switchable layer with sections of the first color arranged adjacent to sections of the first color. When the switchable layer is transparent, the elements being arranged behind the switchable layer seen from the cover layer of the illumination device may be visible. The appearance of the entire illumination device of this element can be influenced by the design of this element.

When the switchable layer is reflective to light, the light rays provided by the light source are reflected and leave the illumination device via the second section of the cover layer. Depending on the design of the switchable layer and in particular depending on its color, it may be possible to illuminate graphics like the brand logo of the vehicle manufacturer in the dark such that it is visible both in the dark and by daylight. Otherwise, the brand logo would only be visible when the light source is turned on.

Thus, the present illumination device is flexible in its configuration and easy to adjust to the color of the adjacently arranged surfaces.

Light guides can guide the light rays emitted from the light source through the illumination device. The light source may be arranged at distance from the areas that should be illuminated. Light guides may be made of a flexible material and be provided with a curved shape. Thus, the light rays can be directed into areas with restricted accessibility. Moreover, the light source can be arranged such that it is not visible from the outside of the illumination device.

In this implementation according to the invention, the illumination device comprises at least two light guides. They may be arranged on top of each other or lateral to each other referring to the point of view of a user looking at the illumination device. In this implementation, one light source may be associated with each light guide. Light patterns may be generated by turning on and off one or more of the light sources in a certain sequence. Moreover, each light guide may be provided with certain outcoupling sections that may be arranged flush to each other referring to the path the light is travelling through the illumination device but may differ slightly from each other. The outcoupling sections may be in the shape of graphics like letters, objects, pictograms or the like. Thereby, particular light effects can be achieved. In particular, a three-dimensional appearance of the graphics may be provided.

In a further embodiment the switchable layer is bistable and switchable between the first state and the second state by a switching voltage. For switching between the first state and the second state, only a short pulse-like switching voltage is needed. It is not necessary to apply a constant voltage to keep the switchable layer in the first state or in the second state. The power consumption can thus be kept low.

In another embodiment, the cover layer comprises
- at least one first section that is opaque to the light rays and of a first color, and
- at least one second section that is transparent to the light rays.

When the switchable layer is in the first color, i.e., in the color of the cover layer, a homogenous appearance of the illumination device can be achieved in which the first section and the second section of the cover layer are almost inconspicuous to each other. Also in this case, it may be desired to clearly differentiate the first section from the second section.

The design of this element may be chosen such that the first section and the second section of the cover layer are clearly distinguishable from each other, e.g., for representing the brand logo of the vehicle manufacturer.

A further embodiment is characterized in that the illumination device comprises a color layer of the first color or a second color, the switchable layer being arranged between the cover layer and the color layer. As mentioned earlier, in case the switchable layer is transparent in the first state, the elements arranged behind the switchable layer become visible. In this embodiment a color layer is provided that is arranged behind the switchable layer seen from the cover layer. The color layer can be provided in any color and in particular in the first color such that the first section and the second section of the cover layer are inconspicuous to each other when the switchable layer is in the first state. Due to production limitations, it may not be possible to provide the color layer with exactly the same first color of the switchable layer in the first state. However, a desirable appearance of the illumination device in the first state may be obtained in case the second color is almost the same as the first color. Moreover, the switchable layer in the first state has to be transparent to impinging light rays but not of a certain color. Thereby the set-up of the switchable layer can be kept simple.

According to a further embodiment, the optical element comprises at least one reflector. By means of the reflector the light emitted from the light source can be directed through the illumination device in a controlled manner. In particular, it is possible to direct the light to specific areas of the illumination which should be particularly illuminated. Light losses can be reduced. The arrangement of the light source and its orientation can be freely chosen, thereby enhancing the constructional freedom. The optical element may also comprise other reflective surfaces such as a reflective paint that is applied to one or more components of the illumination device. The optical element may also comprise one or more lenses collecting and directing light from the light source to increase efficiency.

In a further embodiment the light guide comprises diffusive elements that influence the propagation of the light rays inside the light guide. Diffusive elements may e.g., be nano-particles or diffusive foils. They homogenize the propagation of light rays through the light guide in particular by an increased light scattering. The diffusive elements may be arranged such that on the one hand they are not visible from outside the illumination device, i.e., in the areas of the first section of the cover layer, and on the other hand result in an increased outcoupling out of the light guide in the areas of the second section, thereby providing a high luminance.

In another embodiment the light guide comprises light outcoupling sections for outcoupling the light rays out of the light guide. The outcoupling sections should be located in positions, where they are not directly visible when the device is viewed in the non-illuminated state. The light provided by the light source can thus be efficiently used and a pronounced luminance of the second sections provided.

According to a further embodiment the illumination device comprises light effect generating elements. Such a light effect generating elements may be realized as an effect layer that creates a metallic or pearl effect according to the varnishing of the vehicle or other optically recognizable effects. This effect layer may be applied on the switchable layer and/or on the color layer. The light effect generating elements may also be luster particles that may be incorporated into the color layer and/or the switchable layer. When incorporated into the switchable layer, the light effect generating elements may provide the switchable layer with the desired color and/or with the desired metallic or pearl effect or any other optically recognizable effects. In this case no additional effect layer is needed. The light effect generating elements may be included in beads of the switchable layer. Alternatively, a separate layer can be applied on a foil or an additional part or directly on the light guide or on the switchable device.

A further embodiment is characterized in that the illumination device comprises switching means that interact with the light source upon actuation of the switching element. As mentioned, the switchable layer can be switched between a first state in which the switchable layer is transparent or colored and a second state in which the switchable layer reflects the light. As an example, in the second state the switchable layer may be white. In the second state, light is reflected such that it can leave the illumination device via the second sections. However, if the light source is turned off but the switchable layer in the second state, the second sections would reflect light from outside similar to a mirror which could lead to an unwanted appearance. In this embodiment, the switching of the switchable layer between the first state and the second state and the actuation of the light source can be coordinated e.g., such that the light source is turned on when the switchable layer is switched into the second state and vice versa.

According to a further embodiment the illumination device comprises a control unit that coordinates the light source and the switching element. The coordination between the states of the switchable layer and the activation of the light source as mentioned above can be implemented by the control unit. In particular when the illumination device comprises a plurality of light sources, the control unit may activate the light sources according to a certain sequence such that light patterns and animations can be produced. These light patterns or animations may be definable by the user of the illumination device and thus be individualizable.

The illumination device may comprise two or more light guides arranged adjacent to each other. In this embodiment, one light source may be associated with each light guide. Light patterns may be generated by turning on and off one or more of the light sources in a certain sequence.

In accordance with another embodiment, an intermediate layer is arranged between the optical element and the cover layer. The intermediate layer may be embodied as a refractive index matching layer. In particular, the intermediate layer may be provided with a low refractive index. The index matching layer may be solid or formed by a fluid. The intermediate layer may also be applied only in sections and in particular in which the light rays Ir are to be outcoupled. However, when provided with a low refractive index, an application throughout the entire surface of the optical element may be preferred.

Beyond that, the intermediate layer may be provided with surface properties that facilitate the application of the switchable layer and the cover layer and the bonding to the optical element. Moreover, the amount of Fresnel reflections may be reduced and the appearance improved.

Another aspect of the present invention is directed to a cladding component of or for a vehicle, comprising an illumination device according to one of the embodiments previously discussed.

Yet another aspect of the present invention is directed to a vehicle that comprises an illumination device according to one of the embodiments previously discussed and/or a cladding component according to one of the embodiments previously presented and/or a cladding component as described above.

The technical effects and advantages as discussed regarding the present illumination device to a large extend also apply to the cladding component and to the vehicle. Briefly, it is possible to provide the cladding component with illuminated surfaces that are flexible to configure and easy to adjust to the color of the adjacently arranged surfaces such that they are inconspicuous.

The present invention is described in detail with reference to the drawings attached wherein
- Figure 1A: shows a first embodiment of an illumination device not belonging to the present invention in a first state,
- Figure 1B: shows the illumination device of Figure 1A in a second state,
- Figure 2: shows a second embodiment of the illumination device not belonging to the present invention in the second state,
- Figure 3: shows a third embodiment of the illumination device not belonging to the present invention in the second state,
- Figure 4A: shows a fourth embodiment of an illumination device not belonging to the present invention in the first state,
- Figure 4B: shows the illumination device of Figure 4A in the second state,
- Figure 5: shows a fifth embodiment of the illumination device not belonging to the present invention in the first state,
- Figure 6: shows a sixth embodiment of the illumination device not belonging to the present invention in the second state,
- Figure 7: shows a seventh embodiment of the illumination device not belonging to the present invention in which a left sub-unit is in the second state and a right sub-unit is in the first state,
- Figure 8: shows an eighth embodiment of the illumination device not belonging to the present invention in the second state,
- Figure 9: shows a ninth embodiment of the illumination device according to the present invention in the first state, and
- Figure 10: shows a vehicle comprising a cladding component that is equipped with one embodiment of an illumination device according to the present invention, all Figures being of principle nature.

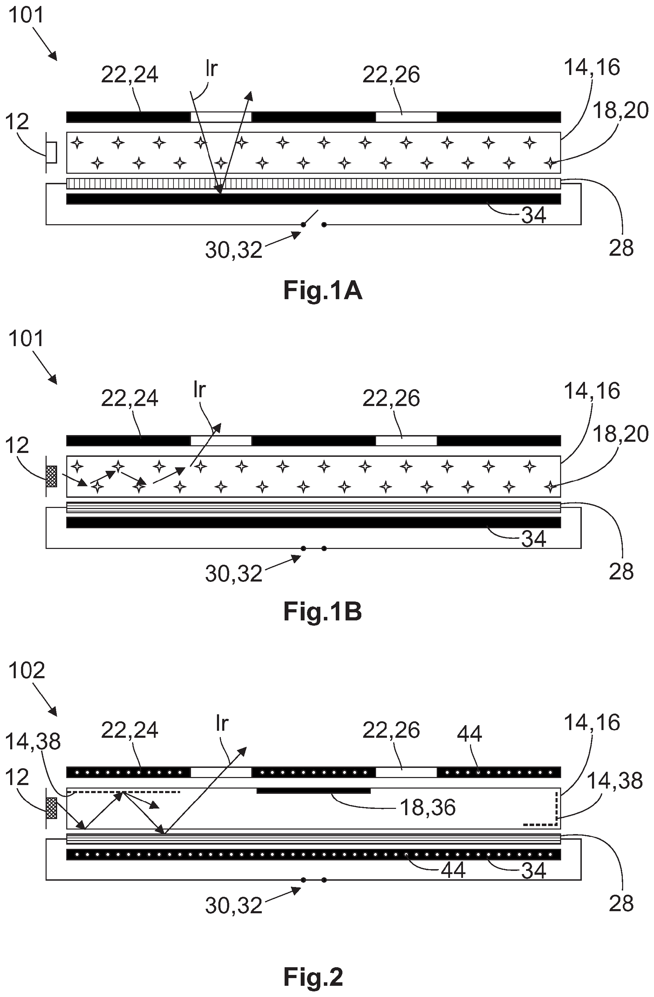

Figure 1A shows a first embodiment of an illumination device 101 not belonging to the present invention in a first state. Figure 1B shows the first embodiment of the illumination device 101 in a second state. The illumination device 101 comprises a light source 12 that provides light rays Ir when turned on(see Figure 1B). The light source 12 may be an LED or comprise a plurality of LEDs such that the color of the emitted light may be chosen according to the particular application. Details of the light source 12 like power supply 30 and/or printed circuit boards are not shown.

Further, the illumination device 101 is equipped with an optical element 14, in this case with a light guide 16 to direct the light rays Ir emitted by the light source 12 through the illumination device 101. Diffusive elements 18 are incorporated into the light guide 16 which are in the first embodiment realized as nano-particles 20.

A cover layer 22 is provided with a plurality of first sections 24 that are opaque to the light rays Ir and are of a first color. The cover layer 22 is further provided with a plurality of second sections 26 that are transparent to light. The cover layer 22 may be applied directly to the light guide 16 or indirectly by one or more light transparent intermediate layers that are not shown. The second sections 26 may be provided as cut-outs or gaps in the cover layer 22 or may be filled with a transparent material. The cover layer 22 provides the surfaces that are visible to a person looking on the illumination device 101.

A switchable layer 28 is arranged on the light guide 16 opposite the cover layer 22. The upper half of the light guide 16 could be covered by the cover layer 22, while the lower half of the light guide 16 may be covered by the switchable layer 28. However, a partial coverage of the light guide 16 may also be conceivable. The switchable layer 28 is connected to a power supply 30 by which a certain voltage can be applied to the switch element. Moreover, a switching element 32 is provided such that the voltage can be switched on and off. By applying a voltage, the switchable layer 28 can be switched between a first state that is shown in Figure 1A and a second state that is shown in Figure 1B. The switchable layer 28 is realized as a bistable element which means that the voltage is only needed to switch between the first state and the second state. Once the desired state is obtained, the switchable layer 28 remains in the respective state without the need for further applying voltage.

Beyond that, a color layer 34 is applied on the switchable layer 28. The color layer 34 can be of the same first color as the first sections 24 of the cover layer 22 or of a different second layer. In the first embodiment, however, the color layer 34 is of the same first color as the first sections 24 of the cover layer 22. The first color may be black.

As noted, in Figure 1A the switchable layer 28 is in the first state in which the switchable layer 28 is transparent to light. At the same time, the light source 12 is turned off. Light rays Ir originating from the environment of the illumination device 101 can penetrate the second section 26 of the cover layer 22 and can also penetrate the switchable layer 28. The light rays Ir are reflected by the color layer 34 and adopt the color of the color layer 34. As mentioned, the first color of the color layer 34 is the same as the first color of the first sections 24 of the cover layer 22. A person looking at the illumination device 101 cannot distinguish between the first sections 24 and the second sections 26 of the cover layer 22. A homogeneous surface is provided.

In Figure 1B the switchable layer 28 is switched into the second state. As mentioned, only a switching voltage is needed to do so. In the second state, the switchable layer 28 is reflective to the light rays Ir. In this case, this is done in that the switchable layer 28 is white. Thus, the switchable layer 28 can be switchable from transparent in the first state to white and thus reflective to light in the second state.

For the sake of clarity, however, the switching element 32 in Figure 1B is shown in the closed state. The light source 12 is turned on. The light rays Ir emitted by the light source 12 are coupled into the light guide 16 and are directed through the illumination device 101. However, as mentioned earlier, the diffusive elements 18 are incorporated into the light guide 16. As a consequence, the light rays Ir do not stay inside the light guide 16 but leave the same in the area of the transparent second section of the cover layer 22. In case the light rays Ir are exiting the light guide 16 in direction to the switchable layer 28, the light rays Ir are reflected back into the light guide 16. The diffusive elements 18 may be designed and arranged inside the light guide 16 such that the majority of light rays Ir is directed to the second sections 26 and not towards the first sections 24 to avoid absorption and thus light losses.

A person looking at the illumination device 101 conceives the first sections 24 of the cover layer 22 as in the first state, while he conceives the second sections 26 as illuminated or back-lit surfaces. The second sections 26 may follow a certain pattern such that e.g., the brand logo of a vehicle manufacturer is represented.

Figure 2 shows a second embodiment of the illumination device 102 not belonging to the present invention. The main set-up of the illumination device 102 of the second embodiment is largely the same as of the first embodiment of the illumination device 101, so only the most important differences are discussed in the following. The diffusive elements 18 are not provided as nano-particles 20 but as a diffusive foil 36 that increases the scattering of the light rays Ir and thereby homogenizes the light. This can also be achieved by modifying the surface of the light guide 16 by graining or by the addition of optical elements, to name a few. Moreover, the light guide 16 is provided with a reflective paint 38, in particular a white paint that redirects the light rays Ir back to the light guide 16. The reflective paint 38 is arranged in the area of the first sections 24 of the cover layer 22 and on the distal end surface of the light guide 16 with reference to the light source 12. Depending on the geometry of the light guide 16, reflective surfaces can also be arranged on the side faces of the light guide 16. The reflective paint 38 is part of the optical element 14. Light leakage is reduced so a high luminance in the second sections 26 is obtained.

Moreover, also the illumination device 102 of the second embodiment is provided with light effect generating elements 44 which are realized as particles, in particular beads, incorporated into the color layer 34 but also in the first sections 24 of the cover layer 22. The effect generating elements 44 may provide a metallic or pearl effect or other optically recognizable effects such as a specific luster or glance.

The light effect generating elements 44 may be used to further adapt the appearance of the illumination device 102 in the second sections 26 to the appearance in the first sections 24 of the cover layer 22. However, the light effect generating elements 44 may also be used to specifically differentiate the appearance of the second sections 26 from the appearance of the first sections 24. The different appearance may be conceivable only when the user looks at the illumination device 102 in a particular angle. Hologram-like effects may also be provided.

Not shown is an embodiment in which the effect generating elements 44 are incorporated into the switchable layer 28 for example of the fourth embodiment of the illumination device 106.

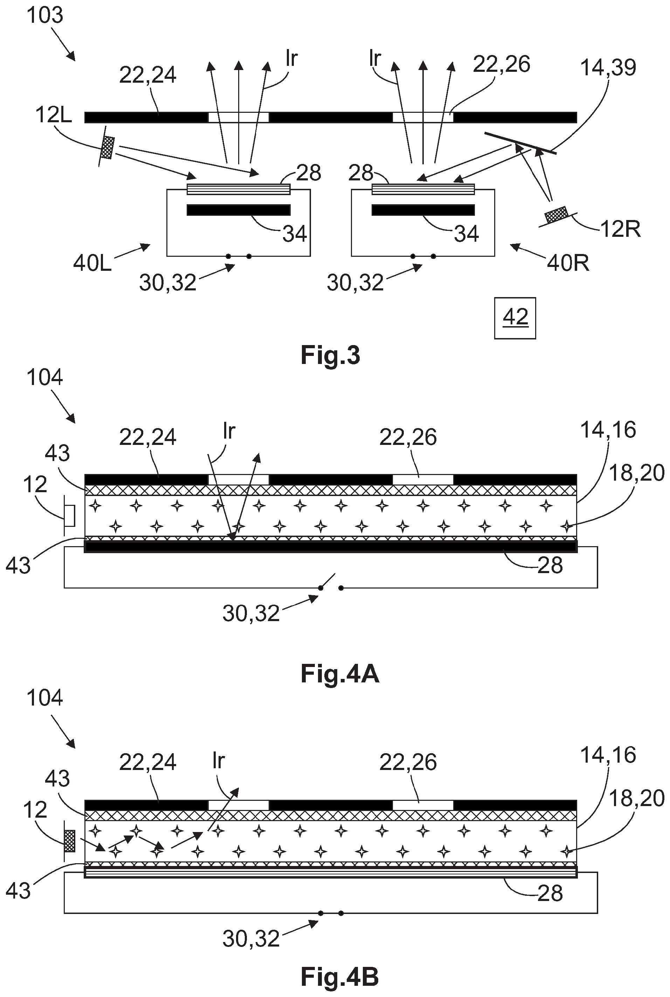

Figure 3 shows a third embodiment of the illumination device 103 not belonging to the present invention. In this case two light sources 12 are provided, namely a left light source 12L and a right light source 12R. Moreover, illumination device 103 according to the third embodiment comprises a left sub-unit 40L and a right sub-unit 40R each consisting of the switchable layer 28, the color layer 34, the power supply 30 and the switching element 32. The left sub-unit 40L is aligned with the left second section 26 and the right sub-unit 40R is aligned with the right section 26 of the cover layer 22. The left light source 12L is arranged and aligned such that the majority of the emitted light rays Ir are impinging the switchable layer 28 of the left sub-unit 40L. The optical element 14 in the third embodiment comprises a reflector 39. The right light source 12R is aligned with the reflector 39 such that the majority of the light rays Ir are impinging the reflector 39 which redirects the light rays Ir towards the switchable layer 28 of the right sub-unit 40R.

Beyond that, the illumination device 103 comprises a control unit 42 by which in particular the light sources 12 and the switchable layers 28 can be actuated in a coordinated way. It may be possible to turn on and off the left light source 12L different from the right light source 12R and to switch the left switchable layer 28 and the right switchable layer 28 accordingly. Moreover, the color and the luminance of the light provided by the left light source 12L and the right light source 12R may also be changed in a coordinated way. Thus, specific light patterns can be produced that may be stored on the control unit 42 and be configurable by a given user of the illumination device 103. The number of the light sources 14 and of the sub-units 40 can be freely chosen.

Figures 4A and 4B show a fourth embodiment of the illumination device 104 in the first state and the second state, respectively. The illumination device 104 according to the fourth embodiment is to a large extent similar to the illumination device 101 according to the first embodiment. However, the illumination device 104 according to the fourth embodiment does not comprise a color layer 34. Instead, the switchable layer 28 in the first state is not transparent but of the first color or a second color. In the fourth embodiment, the switchable layer 28 is of the first color which is the same as the first color of the first section of the cover layer 22. The light rays Ir are reflected by the switchable layer 28, wherein the reflected light rays Ir adopt the first color of the switchable layer 28 in the first state. A person looking at the illumination device 104 cannot distinguish between the first sections 24 and the second sections 26 of the cover layer 22. A homogeneous surface is provided.

In the second state, the switchable layer 28 is reflective to the light rays Ir. In this case, this is done in that the switchable layer 28 is white. Thus, the switchable layer 28 is polychrome and switchable from the first color in the first state to white and thus reflective to light in the second state. The functioning of the illumination device 104 of the fourth embodiment in the second state is to a large extent the same as described for the illumination device 101 of the first embodiment.

In the fourth embodiment of the illumination device 104 an intermediate layer 43 is applied to the light guide 16. Thus, the intermediate layer 43 is arranged between the light guide 16 and the switchable layer 28 and between the light guide 16 and the cover layer 22. It should be noted that the switchable layer 28 and the cover layer 22 can be directly applied to the light guide 12 or an air gap can be provided between them. However, the intermediate layer 43 may be provided with surface properties that facilitate the application of the switchable layer 28 and the cover layer 22 and the bonding to the light guide 16. Moreover, the amount of Fresnel reflections may be reduced and the appearance improved. Further, the color matching options are increased. In particular, the intermediate layer 43 may be provided with a low refractive index.

The intermediate layer 43 may be embodied as a refractive index matching layer. The index matching layer may be solid or formed by a fluid. Although in the fourth embodiment of the illumination device 104 an intermediate layer 43 is applied to the entire light guide 16, it can also be applied only in the areas in which the light rays Ir are to be outcoupled.

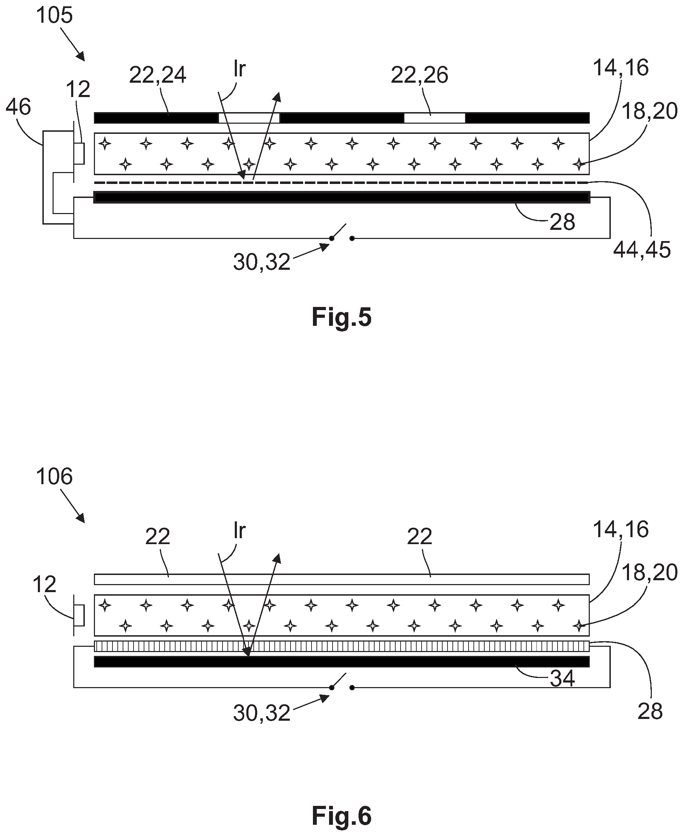

Figure 5 shows a fifth embodiment of the illumination device 105 in the first state. The illumination device 105 according to the fifth embodiment is largely similar to the illumination device 104 of the fourth embodiment but comprises the light effect generating elements 44 as already described with reference to the second embodiment of the illumination device 102. The light effect generating elements 44 are in this case are embodied as an effect layer 45 which may provide a light effect such as a specific luster or glance.

The illumination device 105 according to the fifth embodiment is equipped with switching means 46 that interact with the light source 12 upon actuation of the switching element 32. In this case, the switching means 46 comprise electrical connections such that the light source 12 is included into the electric circuit of the switchable layer 28. As a result, when switching the switchable layer 28 between the first state and the second state, the light source 12 is also activated or deactivated. However, as mentioned above, the switchable layer 28 may be bistable such that only a switching voltage is needed. In this case, the light source 12 would not provide a constant light. Electronic components like relays, transistors or thyristors may be employed as switching means 46 (not shown).

Figure 6 shows a sixth embodiment of the illumination device 106 in the first state which is to a large extent similar to the illumination device 101 of the first embodiment. However, in the sixth embodiment, the cover layer 22 is completely transparent. In the first state the appearance of the illumination device 106 is mainly defined by the color layer 34. In the second state (see Figure 1B) the appearance of the illumination device 106 is mainly governed by the switchable layer 28 which is for example white in the second state.

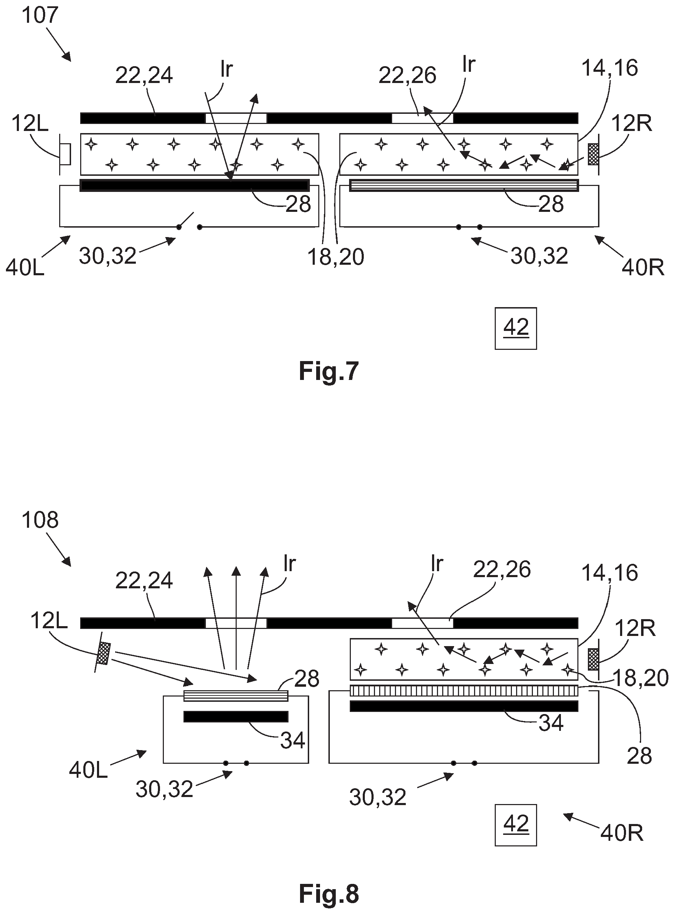

Figure 7 shows a seventh embodiment of the illumination device 107 which is to a large extent similar to the illumination device 104 of the fourth embodiment. However, as in the third embodiment of the illumination device 103, two light sources 12 are provided, namely a left light source 12L and a right light source 12R. Moreover, illumination device 107 according to the seventh embodiment comprises a left sub-unit 40L and a right sub-unit 40R each consisting of the switchable layer 28, the power supply 30 and the switching element 32. The number of the light sources 14 and of the sub-units 40 can be freely chosen.

Not shown is an embodiment in which the left sub-unit 40L and the right sub-unit 40R are provided with a color layer 34 as the first embodiment of the illumination device 101 (see Figures 1A and 1B).

Figure 8 illustrates an eighth embodiment of the illumination device 108 which, like the third embodiment 103 and the seventh embodiment 107, comprises a left sub-unit 40L and a right sub-unit 40R. However, the design of the left sub-unit 40L is the same as the one of the left sub-unit 40L of the third embodiment 103, while the right sub-unit 40R is designed in the same way as the right sub-unit 40R of the seventh embodiment of the illumination device 107.

The left light source 12L and the switchable layer 28 of the left sub-unit 40L can be actuated independently from the right light source 12R and the switchable layer 28 of the right sub-unit 40R in particular by means of the control unit 42. In this way, light patterns and animations can be produced.

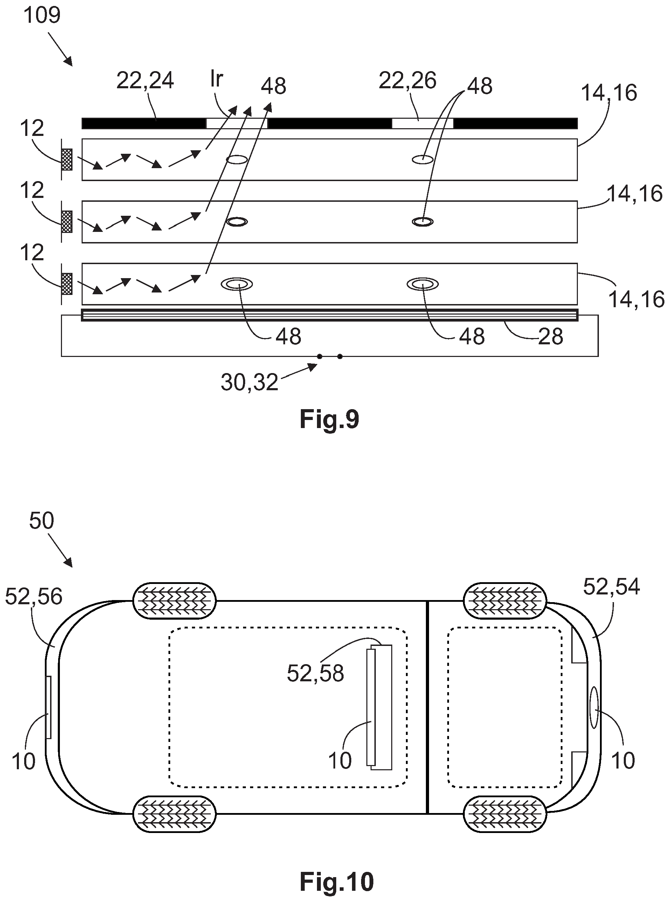

Figure 9 shows a ninth embodiment of the illumination device 109 which is to a large extent similar to the illumination device 104 of the fourth embodiment. However, three light guides 16 are arranged on top of each other in a layer-like arrangement. As previously noted, the light sources 12 could be arranged remote from the associated light guides 16 and thus outside the space between the cover layer and the switchable layer 28. The light sources 12 associated with the light guides 16 can be switched on and off independently from each other. The luminance of the light leaving the illumination device 108 can be changed by the number of light sources 12 being switched on. Thus, light patterns can be generated. If one or more light guides 16 are placed on top of each other, an animation effect can be achieved by placing outcoupling sections 48 that differ for each light guide 16. The outcoupling sections 48 may be provided by grains in the outer surface of the light guide 16 or by other surface modifications of the light guide 16. As a result, the light rays Ir leave the light guide 16 in the area of the second sections 26 and thus can exit the illumination device 109. To concentrate the light rays Ir in the outcoupling sections 48, the light guide 16 is void of any further er diffusive elements 18.

Not shown is an embodiment in which an intermediate layer 43 as described above is placed between the light guides 16 and/or between the light guide 16 and the cover layer 22.

When light sources 12 are turned on/off in a sequence for each of the light guide 16, a simple animation can be achieved (for example, a right arrow traveling along the surface of the light guide 16 in the right direction). Also, a few different messages can be shown in the illuminated area by a respective design of the outcoupling sections 48 (for example: "STOP", "WELCOME" or the like).

Additional effects can be achieved by associating light sources, in particular LEDs, of different colors, to each of the light guides 16. In this way, color mixing and a colorful image can be achieved. Also, by precisely placing the outcoupling sections 48 on each of the light guides 16, a 3D image can be achieved when illuminated. The 3D appearance of the object is apparent when viewing from various angles.

The outcoupling sections 48 as shown in the ninth embodiment of the illumination device 109 are preferably arranged such that they are not visible in the off-state, therefore a 2K-plastic with a material comprising nano particles, or a micro-structured surface can be used to provide the outcoupling section 48. If, however, for a certain area there is a desire of a floating 3D image, outcoupling sections 48 can be provided by other means, for example, by graining a target surface of one or all light guides 16.

When the light guides 16 are placed next to each other (not shown), instead of being stacked or arranged on top of each other as shown in Figure 10, an animated light pattern can also be achieved by illuminating each of the light guides 16 when needed.

Figure 10 shows a vehicle 50 that comprises a number of cladding components 52 that are provided with illumination devices 10 according to one embodiment of the present invention. One cladding component 52 is embodied as a front bumper 54 on which the illumination device 101 is attached to represent the brand logo of the vehicle manufacturer. Another cladding component 52 is a dashboard 58 that is also equipped with one illumination device 10 according to the present invention. Yet another cladding component 52 is a back bumper 56 on which an inventive illumination device 10 is fastened. Other cladding components 52 may be armrests, head liners, front panels, door panels and the like (not shown).

### REFERENCE LIST

- 101 - 109: illumination device
- 12, 12L, 12R: light source
- 14: optical element
- 16: light guide
- 18: diffusive element
- 20: nano-particle
- 22: cover layer
- 24: first section
- 26: second section
- 28: switchable layer
- 30: power supply
- 32: switching element
- 34: color layer
- 36: diffusive foil
- 38: reflective paint
- 39: reflector
- 40L, 40R: sub-unit
- 42: control unit
- 43: intermediate layer
- 44: light effect generating element
- 45: effect layer
- 46: switching means
- 48: outcoupling sections
- 50: vehicle
- 52: cladding component
- 54: front bumper
- 56: back bumper
- 58: dashboard

- Ir: light ray

## Claims

1. Illumination device (109) of or for a vehicle (50), comprising
- a light source (12, 12L, 12R) for providing light rays (Ir),
- an optical element (14) for guiding or directing the light rays (Ir) through the Illumination device (109), the optical element (14) comprising at least two light guides (16) arranged adjacent to each other,
- a cover layer (22),
- a switchable layer (28) switchable between
∘ a first state in which the switchable layer (28) is transparent for incident light rays (Ir) and
∘ a second state in which the switchable layer (28) reflects the incident light rays (Ir), or
- a polychrome switchable layer (28) switchable between
∘ a first state in which the switchable layer (28) is of a first color, and
∘ a second state in which the switchable layer (28) reflects the incident light rays (Ir) and is of a second color,
- the optical element (14) arranged between the cover layer (22) and the switchable layer (28),
- a power supply (30) for applying a voltage on the switchable layer (28), and
- a switching element (32) for turning on and off the power supply (30).

2. Illumination device (109) according to claim 1,
**characterized in that** the switchable layer (28) is bistable and switchable between the first state and the second state by a switching voltage.

3. Illumination device (109) according to one of the claims 1 or 2,
**characterized in that** the cover layer comprises
- at least one first section (24) that is opaque to the light rays (Ir) and of a first color, and
- at least one second section (26) that is transparent to the light rays (Ir).

4. Illumination device (109) according to one of the preceding claims,
**characterized in that** the Illumination device (109) comprises a color layer (34) of the first color or a second color, the switchable layer (28) being arranged between the cover layer (22) and the color layer (34).

5. Illumination device (109) according to one of the preceding claims,
**characterized in that** the optical element (14) comprises at least one reflector (39).

6. Illumination device (109) according to one of the preceding claims,
**characterized in that** the light guide (16) comprises diffusive elements that influence the propagation of the light rays (Ir) inside the light guide (16).

7. Illumination device (109) according to one of the preceding claims,
**characterized in that** the light guide (16) comprises light outcoupling sections (48) for outcoupling the light rays (Ir) out of the light guide (16).

8. Illumination device (109) according to one of the preceding claims,
**characterized in that** the illumination device (109) comprises light effect generating elements (44).

9. Illumination device (109) according to one of the preceding claims,
**characterized in that** the illumination device (109) comprises switching means (46) that interact with the light source (12, 12L, 12R) upon actuation of the switching element (32).

10. Illumination device (109) according to one of the preceding claims,
**characterized in that** the Illumination device (109) comprises a control unit (42) that coordinates the light source (12, 12L, 12R) and the switching element (32).

11. Illumination device (109) according to one of the preceding claims,
**characterized in that** an intermediate layer (43) is arranged between the optical element (14) and the cover layer (22).

12. Cladding component (52) of or for a vehicle (50), comprising an illumination device (109) according to one of the preceding claims.

13. Vehicle (50), comprising an illumination device (109) according to one of the claims 1 to 11 and/or a cladding component (52) according to claim 12.
